(19) Europäisches Patentamt
European Patent Office
Office européen des brevets

(11) **EP 1 478 555 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.⁷: **B60T 8/00**, B60K 28/16, B60K 23/08, G01P 3/50

(21) Anmeldenummer: 03704604.2

(22) Anmeldetag: **13.02.2003**

(86) Internationale Anmeldenummer:
**PCT/EP2003/001417**

(87) Internationale Veröffentlichungsnummer:
**WO 2003/068573 (21.08.2003 Gazette 2003/34)**

(54) **VERFAHREN ZUR ERMITTLUNG EINER BERGFAHRT FÜR FAHRZEUGE MIT ALLRADANTRIEB**

METHOD FOR DETERMINING AN UPWARD JOURNEY FOR ALL-WHEEL DRIVE VEHICLES

PROCEDE POUR DETERMINER UNE MONTEE POUR VEHICULES A TRACTION 4 X 4

(84) Benannte Vertragsstaaten:
**DE FR IT**

(30) Priorität: **13.02.2002 DE 10206108**

(43) Veröffentlichungstag der Anmeldung:
**24.11.2004 Patentblatt 2004/48**

(73) Patentinhaber: **Continental Teves AG & Co. OHG 60488 Frankfurt am Main (DE)**

(72) Erfinder:
• **Schneider, Gerold 35085 Ebsdorfergrund (DE)**
• **Caspari, Roland 60489 Frankfurt (DE)**
• **Stastny, Karel 65936 Frankfurt (DE)**

(74) Vertreter: **Graf, Ulrich Continental Teves AG & Co.oHG Guerickestrasse 7 60488 Frankfurt am Main (DE)**

(56) Entgegenhaltungen:
• **PATENT ABSTRACTS OF JAPAN vol. 2002, no. 06, 4. Juni 2002 (2002-06-04) & JP 2002 046509 A (FUJI HEAVY IND LTD), 12. Februar 2002 (2002-02-12) & DE 101 38 168 A (FUJI HEAVY IND LTD) 4. April 2002 (2002-04-04)**

**Beschreibung**

Die Erfindung betrifft ein Verfahren zur Ermittlung einer Bergfahrt für Fahrzeuge mit Allradantrieb, wobei eine Fahrzeugbeschleunigung ermittelt und eine Beschleunigung des Fahrzeugs gemessen wird.

Moderne Kraftfahrzeuge sind mit unterschiedlichsten elektronischen Systemen zur Steuerung und Regelung des Fahrverhaltens ausgestattet. Beispiele sind Bremskraftregelsysteme (ABS), Fahrstabilitätsprogramme (ESP) und Antriebsschlupfregelungssysteme (ASR, BTCS oder TCS). Die Steuerungsprogramme, die in der Elektronik dieser Systeme vorhanden sind, werten je nach Ausführung eine Vielzahl von Sensoren, die in das Kraftfahrzeug eingebaut sind, aus. Dies sind z.B. Raddrehzahl-, Längsbeschleunigungs-, Querbeschleunigungs- und Drehratensensoren. Bei einer Antriebsschlupfregelung wird durch die Elektronik dafür gesorgt, dass bei starker Beschleunigung des Fahrzeugs die das Fahrzeug beschleunigenden Räder nicht durchdrehen. Das kann zum Einen durch Abbremsen des durchdrehenden Rades geschehen und/oder durch Drosselung der Antriebsleistung (Motormomenten-Reduktion).

In der DE-A 3809101 ist ein Verfahren und eine Schaltungsanordnung zur Steuerung eines ASR-Systems mit Bremsen- und Motoreingriff beschrieben. Bei diesem Verfahren wird zur Antriebsschlupfregelung die Radbremse eingesetzt und/oder in die Steuerung des Antriebsmotors eingegriffen. Die Antriebsschlupfregelung greift hierzu u. a. auf übliche Komponenten der ohnehin vorhandenen Antiblockiereinrichtung (ABS) zu. Die Kommunikation mit den benötigten Fahrzeugkomponenten (beispielsweise Motor) kann über einen an sich bekannten Fahrzeugdatenbus (CAN) erfolgen. Hierbei werden zur Durchführung des Verfahrens Sensoren zur Ermittlung des Raddrehverhaltens durch Schaltkreise zur Signalverarbeitung ausgewertet und Stellsignale zur Erzeugung von elektromagnetischen Hydraulikventilen erzeugt, die eine Steuerung der Bremskraft ermöglichen. Die Elektronik des Systems benötigt zur Berechnung der erforderlichen Stellgröße die sog. Fahrzeugreferenzgeschwindigkeit $V_{ref}$. Diese Größe wird gradientengestützt in der Regel durch die Radgeschwindigkeit des langsamsten Rads bestimmt. Der Gradient wird dabei aus dem aktuellen Motormoment und dem Fahrzeugleergewicht ermittelt. Der errechnete Gradient entspricht dabei der theoretischen Fahrzeugbeschleunigung auf Hochreibwert in der Ebene. Besitzen die Fahrzeuge mit Allradantrieb einen Beschleunigungssensor (G-Sensor), so wird dieser zusätzlich zur Gradientenbestimmung herangezogen. Es wird hierbei das Maximum aus errechnetem und gemessenem Gradienten ermittelt. Treten besondere Fahrsituationen auf, so kann es vorkommen, dass eines oder mehrere Räder nicht mehr die aktuelle Fahrzeuggeschwindigkeit wiedergeben, da eines der Räder durchdreht. In diesem Fall ist es üblich, dass das durchdrehende Rad nicht zur Bildung der FahrzeugReferenzgeschwindigkeit $V_{ref}$ herangezogen wird.

Bei allradgetriebenen Fahrzeugen tritt darüber hinaus das Problem auf, dass alle Räder Antriebsschlupf aufweisen können, so dass im Antriebsfall kein Maß für die Fahrzeugreferenzgeschwindigkeit, die üblicherweise aus den Radgeschwindigkeiten ermittelt wird, vorliegt und z.B. eine Bergabfahrt nicht vom Antriebsschlupf unterschieden werden kann. Bei einachsig angetriebenen Fahrzeugen kann dieses Problem im Antriebsfall nicht auftreten, da zumindest die nicht angetriebene Achse keinen Antriebsschlupf aufweisen kann. Deren Räder können somit immer als Maß für die Referenzgeschwindigkeit verwendet werden.

Aus der DE 197 32 554 A1 sind ein Verfahren und eine Vorrichtung zur Bestimmung der Geschwindigkeit eines allradgetriebenen Fahrzeugs bekannt. Hier werden einzelne Radbeschleunigungen zum herrschenden Motormoment in Beziehung gesetzt und untereinander verglichen, um ggf. den Zustand, dass alle Räder durchdrehen, zunächst erkennen und dann Abhilfen treffen zu können. Nachteil dieses Verfahrens ist, dass aus verschiedenen Gründen die Erkennungsschwellen zur Vermeidung von Fehlerkennungen vergleichsweise grob gewählt werden müssen, so dass die Erkennung nicht sehr genau ist und eine Fahrbahnsteigung im wesentlichen unberücksichtigt bleibt.

Wenn Situationen auftreten, in denen die Radgeschwindigkeiten alleine nicht mehr zur zuverlässigen Bestimmung der Fahrzeugreferenzgeschwindigkeit ausreichen, werden Ersatzstrategien verwendet. Mit bekannten Ersatzstrategien lassen sich einzelne Probleme lösen, beispielsweise wenn ein Fahrer auf niedrigem Reibwert mit durchdrehenden Rädern fährt oder wenn unter bestimmten Bedingungen bei der Bergfahrt, insbesondere bergab, beschleunigt wird. Die ersatzweise ermittelte Fahrzeugreferenzgeschwindigkeit wird dann zunehmend ungenau, wenn die Zustände zusammen auftreten, und es besteht das Bedürfnis, auch diese Probleme zu lösen, die entstehen, wenn beispielsweise bei einer Bergabfahrt bei einem Allradfahrzeug ein instabiler Radlauf auftritt.

Bei den vorstehend erwähnten elektronischen Systemen zur Steuerung des Fahrzeugverhaltens wird der Einfluss einer Bergfahrt nur unzureichend oder gar nicht berücksichtigt. Bei Gefällefahrten liegt die tatsächliche Fahrzeugbeschleunigung höher als die errechnete Fahrzeugbeschleunigung [f(Motomoment, Fahrzeugmasse)] und die gemessene Fahrzeugbeschleunigung (G- bzw. Beschleunigungs-Sensor zeigt um den Steigungsanteil verfälschten Beschleunigungswert an). Zum Kompensieren des Gefälles wurde bisher unter bestimmten Bedingungen zum berechneten Gradienten ein fester Anteil oder ein fester Gradient hinzuaddiert. Diese Art einer Steigungskorrektur ist notwendig, um bei Bergabfahrten eine zu niedrige Referenzgeschwindigkeit auszuschließen. Sie ist jedoch an Bedingungen geknüpft, die zu Nachteilen bei unterschiedlichen Fahrbahnoberflächen führen können.

Die JP 2002 046 509 (≙DE 101 38 168 A1) zeigt ein Verfahren nach dem Oberbegriff des Anspruch 1.

Aufgabe der Erfindung ist es, ein Verfahren zur Ermittlung einer Steigung und ein Verfahren zur Anpassung der Fahrzeugreferenzgeschwindigkeit an die ermittelte Steigung anzugeben, die zuverlässig und mit geringem Aufwand zu richtigen Ergebnissen führen.

Die Aufgabe wird mit den Merkmalen der unabhängigen Ansprüche gelöst. Abhängige Ansprüche sind auf bevorzugte Ausführungsformen der Erfindung gerichtet.

Neben der Ermittlung der Fahrzeugreferenzgeschwindigkeit aus den Signalen eines oder zweier Radsensoren an der sekundären Achse, wird mittelbar oder unmittelbar aus den Radsignalen die Fahrzeugbeschleunigung, insbesondere die Fahrzeuglängsbeschleunigung, ermittelt und diese in einer vergleichenden Betrachtung zu einer mit einem Sensor gemessenen Beschleunigung in Beziehung gesetzt. Als sekundäre Achse wird die Fahrzeugachse bezeichnet, die bei einem Fahrzeug mit Allradantrieb zugeschaltet werden kann. Dabei wird der Effekt ausgenutzt, dass bei einer Bergfahrt die Differenz von Achsbeschleunigung und G-Sensorbeschleunigung die Steigung anzeigt. Es gilt die Beziehung

$$\text{Steigung (Slope)} = \text{Achsbeschleunigung(aus den Raddrehzahlen)} - \text{gemessene Beschleunigung(G-Sensor)}$$

Da die Radbeschleunigung in direkten Bezug zu der Fahrzeugbeschleunigung gesetzt wird, ist die ermittelte Steigung nur bei schlupffreiem Lauf der Räder richtig. Es werden daher "stabile" Räder bestimmt und situationsabhängig die tatsächliche Steigung ermittelt.

Der Erkennung von stabilen Rädern liegt die Erkenntnis zugrunde, dass sich die Steigungsverläufe von Fahrbahnen nur relativ langsam ändern. Daher wird nur der niederfrequente Anteil aus dem ermittelten Signal für die Steigung (Slope) verwendet. Das extrahieren des niederfrequenten Anteils wird durch Filtern der Steigung mit einer Zeitkonstanten $T1_{Slope}$ in einen Tiefpassfilter 1ter Ordnung realisiert.

$$\text{Gefilterte Steigung (SlopeFilt)} = PT1\_Filt(Slope)$$

Mit den beiden Signalen "Steigung" und "gefilterte Steigung" wird eine Güteabschätzung bezüglich stabiler Räder und damit der ermittelten Steigung durchgeführt. Die Güteabschätzung und die Ermittlung der Steigung erfolgt dabei in Abhängigkeit von der jeweiligen Fahrsituation, nämlich ob die Antriebsschlupfregelung aktiv oder nicht aktiv ist bzw. das Fahrzeug sich in einer Antriebsschlupfregelung befindet oder nicht.

Als Maß für die Güte wird eine erste zulässige Varianz (SlopeVar) durch Filtern des Vergleichsergebnisses aus Steigung und gefilterte Steigung gebildet. Dabei wird die erste Varianz durch Tiefpassfilterung aus der quadratischen Abweichung von der aktuellen (Slope) und gefilterten Abweichung (SlopeFilt) ermittelt. Weiterhin wird ein Schwellenwert Tcs0_est_slope_var_limit der Varianz empirisch ermittelt und bei der Lern- bzw. Erkennungsstrategie für "stabiles Raddrehverhalten" berücksichtigt. Liegt der ermittelte Wert der ersten Varianz unterhalb des Schwellenwerts, so wird von stabilem Raddrehverhalten ausgegangen, wenn die Antriebsschlupfregelung nicht aktiv ist. Die ermittelte Steigung kann für die Bestimmung der Steigung SlopeFilt oder einer abgesicherten Steigung SlopeSave und der damit verbundenen Gradientenanpassung verwendet werden.

Befindet sich das System in einer aktiven Antriebsschlupfregelung, d.h. in einer ASR Motorregelung bzw. BTCS Bremsenregelung, kann die Plausibilisierung aufgrund von externen Störgrößen, wie z.B. die Fahrbahnoberfläche beschreibenden Größen (Niedrigreibwert,z.B. Eis) zu Ergebnissen führen, die stabile Verhältnisse wiederspiegeln, obwohl instabile Radläufe vorliegen. Daher wird bei aktiver Antriebsschlupfregelung immer von einem instabilen Raddrehverhalten ausgegangen und eine Steigung nur nach bestimmten Regeln (linguistischen Termen) zugelassen. Mit Hilfe der Regeln wird eine zum Beispiel auf Niedrigreibwert falsch geschätzte Steigung vermieden. Hierzu wird vorteilhaft eine zweite Varianz (TorqueVar) ermittelt, die die Beschleunigung der sekundären Achse in Abhängigkeit vom Motormoment wiedergibt. Dabei wird die zweite Varianz (TorqueVar) zusammen mit der ersten Varianz (SlopeVar) bewertet. Bei einer Fahrsituation, bei der die Antriebsschlupfregelung aktiv ist, kann dann in Abhängigkeit von dem Ergebnis der Bewertung eine extern verursachte, das Fahrzeug antreibende Größe (Hangabtriebskraft bei Bergfahrt) von einer, einen instabilen Radlauf erzeugenden Größe (Überschussmoment bei Niedrigreibwert) unterschieden werden. Hierzu wird ein Schwellenwert Tcs0_est_torque_var_limit der zweiten Varianz (TorqueVar) empirisch ermittelt und bei der Lern- bzw. Erkennungsstrategie für "stabiles Raddrehverhalten" berücksichtigt. Liegt der ermittelte Wert der zweiten Varianz in einem bestimmten Verhältnis zu dem Wert der ersten Varianz so wird von einem stabilen Raddrehverhalten ausgegangen, wenn die Antriebsschlupfregelung aktiv ist. Die Überprüfung bzw. Plausibilisierung, ob die Beschleunigung an der sekundären Achse (Tc4wdHaAcc) die tatsächliche Fahrzeugbeschleunigung wiedergibt, erfolgt dadurch, dass ermittelt wird, ob der ermittelte Wert der zweiten Varianz (TorqueVar) z.B. den 1,5 bis 2,5-fachen Wert der ersten Varianz (SlopeVar) erreicht oder überschreitet. Bei Erfüllung der Bedingungen "zweite Varianz (TorqueVar) = 1,5 bis 2,5 *erste Varianz (SlopeVar) und erste Varianz SlopeVar < Tcs0_est_slope_var_limit, wird der gefilterten Abweichung (SlopeFilt) als wahre Steigung vertraut und die abgesicherte Steigung (SlopeSave) dieser nachgeführt.

Um Fehler in der Ermittlung der Steigung auszuschließen, wird vorteilhaft bei aktiver Antriebsschlupfregelung das Erlernen der Steigung beendet, wenn die erste Varianz (SlopeVar) und die zweite Varianz (TorqueVar) mindestens einen unteren Schwellwert Tcs0_est_slope_var_limit und/oder Tcs0_est_torque_var_limit erreichen oder unterschreiten, wobei der jeweilige Schwellenwert der Varianzen gleich oder unterschiedlich sein kann. Erreichen bzw. unterschreiten die erste Varianz (SlopeVar) und die zweite Varianz (TorqueVar) den Schwellenwert Tcs0_est_slope_var_limit, wird die Lern- bzw. Erkennungsstrategie beendet, um das System des Antriebsschlupfreglers anzuregen. Zur Anregung wird das Motormoment über den Motorregler moduliert.

Das Verfahren sieht vorteilhaft vor, dass bei instabilem Radverhalten eine abgesicherte Steigung (SlopeSave) zugelassen wird, wenn das instabile Radverhalten durch die Beziehung "erste Varianz (SlopeVar) ≥ Tcs0_est_slope_var_limit" ermittelt bzw. angezeigt wird.

Dabei wird die abgesicherte Steigung (SlopeSave) in Abhängigkeit von der gefilterten Abweichung (SlopeFilt) gebildet. Die abgesicherte Steigung wird dabei mit einem Vertrauensfaktor MyOfSlope gewichtet, der vorzugsweise in Abhängigkeit von dem durch die Antriebsschlupfregelung angeforderten Motormoment, dem aktuellen Motormomentenverlauf, der ersten Varianz, dem Abstand des schnellsten und langsamsten Rades zueinander, der betragsmäßigen Abweichung der geschätzten Steigung (SlopeFilt) und der frequenzbegrenzten Steigung (SlopeFilt) ermittelt wird.

Ist die Steigung gesichert ermittelt worden, erfolgt eine Anpassung bzw. Modifikation der Fahrzeugreferenzgeschwindigkeit an die Fahrsituation. Hierzu wird zu dem Referenzgradient der Fahrzeugreferenzgeschwindigkeit ein von der ermittelten Steigung abgeleiteter Gradient hinzuaddiert, d.h. um die ermittelte Steigung angehoben.

Ein Ausführungsbeispiel wird im Folgenden näher beschrieben.

Der Steigungsoffset $Grad_{Steigung}$ setzt sich aus zwei Anteilen zusammen, der geschätzten Steigung $C_{STEIGUNG}$ und einer Sicherheitskonstante $C_{SICH}$. Ist der Beschleunigungs- bzw. G-Sensor defekt, kann keine Steigung geschätzt werden.

Nach einer kurzen Darstellung der verwendeten Basissignale wird die Ermittlung von $C_{STEIGUNG}$ dargestellt. Abschließend finden sich Informationen zur Berechung der Sicherheitskonstante.

## • Basissignale

Bei dem hier gewählten, nicht rekursiven Ansatz, wird als Schätzwert für die Steigung die Differenz von der Beschleunigung der Räder der sekundären Achse, z.B. der Hinterräder Tc4wdHaAcc, und der G-Sensorbeschleunigung LoSenACC nach der Beziehung

$$Slope = Tc4wdHaAcc - LoSenACC$$

genommen, wobei Slope die geschätzte Steigung bei einem vorwärtsfahrenden Fahrzeug wiedergibt.

Damit Slope als Schätzwert für die Steigung verwendbar ist, muss Tc4wdHaAcc die wahre Fahrzeugbeschleunigung wiederspiegeln. Dies gilt aber nur bei stabil laufenden Rädern der sekundären Achse. Laufen die Räder nicht stabil, d.h. befinden sich die Räder im Schlupf, so ist die wahre Steigung unbekannt.

Funktionsbeschreibung

Die zur Steigungsermittlung für Fahrzeuge verwendete Lern- bzw. Erkennungsstrategie erfolgt mindestens in Abhängigkeit von zwei Fahrsituationen, die die Zustände "Antriebsschlupfregelung aktiv" oder "Antriebsschlupfregelung nicht aktiv" wiedergeben. Die Lern- bzw. Erkennungsstrategie außerhalb der Antriebsschlupfregelung verwendet zur Erkennung von stabil laufenden Rädern eine Plausibilisierung der Momentansteigung Slope. Dabei wird ausgenutzt, dass Steigungsverläufe von Strassen sich nur begrenzt schnell ändern können. Zur Plausibilisierung von Slope wird das Signal mit einer Zeitkonstanten von $Tl_{SLOPE} = k_1$[msec] mit einem PT1-Fllter erster Ordnung gefiltert und mit der Steigungsänderung Slope verglichen. Weicht Slope stark von SlopeFilt ab, ändert sich Slope stärker als die Steigung normaler Strassen, kann bei starken Abweichungen auf instabile Räder geschlossen werden. Als Maß für die Abweichung wird die Varianz von Slope verwendet, die sich aus einer Tiefpassfilterung der quadratischen Abweichung von aktueller und gefilterter Steigung mit $T1_{VAR} = k_2$[msec] ergibt. Bei SlopeVar ≤ dem Schwellenwert Tcs0_est_slope_var_limit ist SlopeFilt als Steigungsschätzwert verwendbar, das bedeutet, dass stabile Räder vorliegen und dass folglich Tc4wdHaAcc die wahre Fahrzeugbeschleunigung wiederspiegelt. Damit wird das Signal SLOPE_STAB==1 gesetzt. Der Schwellenwert Tcs0_est_slope_var_limit wird empirisch festgelegt. In diesem Fall kann man direkt den Schätzwert SlopeFilt oder wahlweise den später noch beschriebenen Wert SlopeSave als $C_{Steigung}$

nehmen. Ist jedoch SlopeVar >= Tcs0_est_slope_var_limit, so können instabil laufende Räder vorliegen. $C_{Steigung}$ wird dann immer auf die abgesicherte Steigung SlopeSave gesetzt, deren Ermittlung in einem späteren Abschnitt beschrieben wird.

Die Lern- bzw. Erkennungsstrategie bei aktiver Antriebsschlupfregelung weist im Gegensatz zu den zwei Unterscheidungskriterien "Steigungsvarianz klein" bzw. "Steigungsvarianz groß" bei nicht aktiver Antriebsschlupfregelung vier Unterscheidungskriterien auf, die auf der Einbeziehung einer auf dem Motormoment basierten zweiten Varianz TorqueVar beruhen. Diese zweiten Varianz TorqueVar ist ein Maß für die Anregung des Systems, das für die Steigungsschätzung ausreichend angeregt sein muss, um das Geschwindigkeitsmuster von Rädern auf Eis von dem einer Bergabfahrt zu trennen. TorqueVar ist so ausgelegt, dass SlopeVar und TorqueVar auf Eis einen ähnlichen Verlauf, auf Hochreibwert aber einen unterschiedlichen Verlauf zeigen.

Da TorqueVar nur für Eis mit SlopeVar übereinstimmen soll, sind die folgenden Annahmen für die Berechung von TorqueVar zulässig:

1. Es wird eine konstante Vortriebskraft $\bar{F}_V$ abgesetzt. In diesem Fall ist auch die Fahrzeugbeschleunigung LoSenACC konstant bei $ACC_{const}$
2. Der Antriebsstrang ist starr und nicht schwingungsfähig. Die Tägheitsmasse J ist bekannt.

Drückt man die Beschleunigung an der sekundären Achse in Abhängigkeit vom Motormoment nach der Beziehung

$$Tc4wdHaAcc \sim \frac{ActTorque}{J} - \frac{\bar{F}_V r_{eff}}{J}$$

aus und bestimmt den Arbeitspunkt des Motorreglers als tiefpassgefiltertes Signal 1ter Ordnung des Motormoments so ergibt sich die Varianz TorqueVar aus der Ableitung der Beziehungen

$$Slope = Tc4wdHaAcc - LoSenACC \text{ mit } Tc4wdHaAcc \sim$$

$$\frac{ActTorque}{J} - \frac{\bar{F}_V r_{eff}}{J}$$

so dass $Slope = \frac{ActTorque}{J} - \frac{\bar{F}_V r_{eff}}{J}$ - LoSenACC, wobei die Konstantanteile $ACC_{const}$, $\bar{F}_V r_{eff} / J$ ohne Einfluss auf die Varianz sind. Unter den obigen Annahmen kann man "SlopeVar" nur in Abhängigkeit vom Motormoment ausdrücken, denn es gilt Tc4wdHaAcc ist proportional zu "*ActTorque J*.

Ein hohes TorqueVar bei gleichzeitig niedrigen SlopeVar deutet dann auf stabile Räder hin. Dahingegen vermutet man, instabile Räder generell bei großem SlopeVar unabhängig von TorqueVar. Bei niedrigen TorqueVar und niedrigen SlopeVar, ist keine Entscheidung auf stabile oder instabile Räder möglich. In diesem Fall muss die Steigungsschätzung gesperrt werden, bis das System wieder ausreichend angeregt ist.

Als ausreichend angeregt gilt das System, wenn SlopeVar alleine aufgrund der Momentenmodulation die Schwelle Tcs0_est_slope_var_limit auf Eis sicher überschreiten würde. Hierzu muss die zweite, auf dem Motormoment basierende Varianz TorqueVar auch > Tcs0_est_slope_var_limit sein. Durch die Modulation des Motormoments über die Größe "TorqueExcit" gehen bei Niedrigreibwerten z.B. die Räder der sekundären Achse in den Schlupf. Dabei stellen sich Beschleunigungswerte der Räder ein, die erheblich über der Fahrzeugbeschleunigung liegen, d.h. die Radbeschleunigungen folgen im Wesentlichen der Modulation des Motormoments. Findet die Modulation des Motormoments dagegen zu einem Zeitpunkt der Bergabfahrt auf Hochreibwert statt, folgt die Fahrzeugbeschleunigung im Wesentlichen den Radbeschleunigungen, d.h. die Radbeschleunigungen folgen der Modulation des Motormoments nicht. TorqueExcit kann dabei als minimale Momentenänderung für eine ausreichende Systemanregung verstanden werden.

Unterschreitet die erste Varianz SlopeVar die Lernschwelle Tcs0_est_slope_var_limit, dann wird eine Momentenmodulation erzwungen, indem das System nach unten auf einen unter dem minimalen Wert von der Größe TorqueExcit gesteuert wird. Das System wird hierdurch wieder aktiv angeregt.

• Steigungsoffset $C_{Steigung}$

In Abhängigkeit von SlopeVar ergibt sich damit die in der nachfolgende Tabelle zusammengefasste Berechnungsvorschrift für $C_{Steigung}$:

Tabelle 1:

| Steigungsoffset $C_{Steigung}$ | | |
|---|---|---|
| | TCS-Regelung nicht aktiv | TCS-Regelung aktiv |
| SlopeVar < Tcs0_est_slope_var_limit | $C_{Steigung}$ = SlopeFilt oder SlopeSave | $C_{Steigung}$ = SlopeSave |
| SlopeVar >= Tcs0_est_slope_var_limit | $C_{Steigung}$ = SlopeSave | |

SlopeSave ermittelt sich aus den Signalen der letzten Steigung die man bei stabilen Rädern erlernt hat, folglich aus SlopeFilt und über einen Vertrauensfaktor MyOfSlope, der eine Größe wiedergibt, wie stark SlopeSave der gefilterten Steigungsänderung SlopeFilt nachgeführt wird. Mit anderen Worten, MyOfSlope gibt einen Faktor an, wie stark ich dem ermittelten Signal SlopeFilt traue, dass es den tatsächlichen Steigungswert wiedergibt. Je stärker ich dem Wert SlopeFilt traue, um so stärker führe ich SlopeSave diesem gefilterten Steigungswert nach.

Die Gewichtung MyOfSlope ist so zu wählen:

- dass eine zu hohe geschätzte Steigung auf Niedrigreibwerten vermieden wird,

- eine Steigungskorrektur bei Bergabfahrten mit überdrehenden Rädern während einer Gefällstrecke noch möglich ist

- Dauerregelungen bei Bergabfahrten durch Nachführen der Steigung beendet werden können

Das Vertrauensmaß MyOfSlope wird für zwei zu unterscheidenden Fälle ermittelt. Diese Fälle sind:

a. ASR-Motorregelung und
b. außerhalb der ASR-Motorregelung.
 Der Vertrauensfaktor MyOfSlope bestimmt sich aus den vorstehend beschriebenen Lernbedingungen (Funktionsbeschreibung), d.h. außerhalb der ASR-Motorregelung muss die
c. erste Varianz SlopeVar klein sein($Tc4wdHaAcc \approx Acc_{Rä\text{-}der}$) d.h. während einer ASR-Motorregelung müssen die
d. erste Varianz SlopeVar klein sein($Tc4wdHaAcc \approx Acc_{Rä\ der}$)
e. zweite Varianz TorqueVar groß sein {TorqueVar ≈ SlopeVar (auf Niedrigreibwert) oder TorqueVar > SlopeVar (bei Bergabfahrt)
f. und weitere linguistischen Terme erfüllt sein, wie der Abstand des schnellsten Rades zu dem langsamsten Rad muss bezüglich der Geschwindigkeit bestimmten Kriterien genügen, das durch die Antriebsschlupfregelung angeforderten Motormoment, der aktuellen Motormomentenverlauf, die erste Varianz SlopeVar, die betragsmäßigen Abweichung der geschätzten Steigung (Slope) und der frequenzbegrenzten Steigung (SlopeFilt) müssen bestimmten Kriterien genügen u.dgl.
 MyOfSlope berechnet sich aus den Fuzzy Mengen in Abhängigkeit von den vorstehenden Krieterien.

**Patentansprüche**

1. Verfahren zur Ermittlung einer Bergfahrt für Fahrzeuge mit Allradantrieb, wobei eine Fahrzeugbeschleunigung ermittelt und eine Beschleunigung des Fahrzeugs gemessen wird, mit den Schritten :

 Ermitteln der Beschleunigung an der sekundären Achse aus einer oder beiden Radgeschwindigkeiten
 Ermitteln der Abweichung zwischen der Beschleunigung an der sekundären Achse und der gemessenen Beschleunigung
 **gekennzeichnet durch** die Schritte
 Filtern der ermittelten Abweichung mit einer Zeitkonstanten
 Vergleichen der Abweichung mit der gefilterten Abweichung
 Ermitteln von Fahrsituationen, die die Zustände "Antriebsschlupfregelung aktiv" oder "Antriebsschlupfregelung nicht aktiv" wiedergeben Ermitteln der Steigung in Abhängigkeit von dem Vergleichsergebnis und von der Fahrsituation.

2. Verfahren nach Anspruch 1, **dadurch gekennzeichnet, dass** die Steigung mittels mindestens einer ersten zulässigen Varianz durch Filtern des Vergleichsergebnisses ermittelt wird.

**3.** Verfahren nach Anspruch 2, **dadurch gekennzeichnet, dass** die Varianz durch Tiefpassfilterung aus der quadratischen Abweichung von der aktuellen und gefilterten Abweichung ermittelt wird.

**4.** Verfahren nach Anspruch 2, **dadurch gekennzeichnet, dass** ein Schwellenwert "Tcs0_est_slope_var_limit" der ersten Varianz empirisch ermittelt wird.

**5.** Verfahren nach Anspruch 4, **dadurch gekennzeichnet, dass** bei einer Fahrsituation, bei der die Antriebsschlupfregelung nicht aktiv ist und bei der die erste Varianz ≤ dem Schwellenwert Tcs0_est_slope_var_limit ist, als Steigung der Wert der gefilterten Abweichung oder einer abgesicherten Steigung zugelassen wird.

**6.** Verfahren nach einem der Ansprüche 2 bis 5, **dadurch gekennzeichnet, dass** eine zweite Varianz ermittelt wird, die die Beschleunigung der sekundären Achse in Abhängigkeit vom Motormoment wiedergibt.

**7.** Verfahren nach Anspruch 6, **dadurch gekennzeichnet, dass** die zweite Varianz und die ersten Varianz bewertet werden.

**8.** Verfahren nach einem der Ansprüche 6 oder 7, **dadurch gekennzeichnet, dass** bei einer Fahrsituation, bei der die Antriebsschlupfregelung aktiv ist, in Abhängigkeit von der Bewertung der ersten und zweiten Varianz eine extern verursachte, das Fahrzeug antreibende oder einen instabilen Radlauf wiedergebende Größe, z.B. Bergabfahrt, Fahrt auf Eis etc, ermittelt wird.

**9.** Verfahren nach einem der Ansprüche 6 bis 8, **dadurch gekennzeichnet, dass** ein Schwellenwert Tcs0_est_torque_var_limit der zweiten Varianz empirisch ermittelt wird.

**10.** Verfahren nach einem der Ansprüche 6 bis 9, **dadurch gekennzeichnet, dass** zur Überprüfung, ob die Beschleunigung an der sekundären Achse die tatsächliche Fahrzeugbeschleunigung wiedergibt, ermittelt wird, ob der ermittelte Wert der zweiten Varianz mindestens den 1,5 bis 2,5-fachen Wert der ersten Varianz erreicht oder überschreitet.

**11.** Verfahren nach Anspruch 10, **dadurch gekennzeichnet, dass** bei Erfüllung der Bedingung "zweite Varianz = mindestens 1,5 bis 2,5 *erste Varianz, als Steigung der Wert der gefilterten Abweichung zugelassen wird.

**12.** Verfahren nach einem der Ansprüche 6 bis 11, **dadurch gekennzeichnet, dass** bei aktiver Antriebsschlupfregelung die Ermittlung der Steigung beendet wird, wenn die erste Varianz und die zweite Varianz mindestens einen unteren Schwellenwert Tcs0_est_torque_var_limit bzw. Tcs0_est_slope_var_limit erreichen oder unterschreiten, wobei der jeweilige Schwellenwert der Varianzen gleich oder unterschiedlich sein kann.

**13.** Verfahren nach Anspruch 11, **dadurch gekennzeichnet, dass** bei dem Fall, dass die erste Varianz den Schwellenwert Tcs0_est_slope_var_limit und die zweite Varianz den Schwellenwert Tcs0_est_torque_var_limit erreicht oder unterschreitet, das Motormoment zur Anregung des Antriebsschlupfreglers moduliert wird.

**14.** Verfahren nach Anspruch 4, **dadurch gekennzeichnet, dass** eine abgesicherte Steigung zugelassen wird, wenn ein instabiler Radlauf durch die Beziehung "erste Varianz ≥ Tcs0_est_slope_var_limit" ermittelt bzw. angezeigt wird.

**15.** Verfahren nach Anspruch 14, **dadurch gekennzeichnet, dass** die abgesicherte Steigung in Abhängigkeit von der gefilterten Abweichung (SlopeFilt) und einem Faktor MyOFSlope ermittelt wird.

**16.** Verfahren nach Anspruch 15, **dadurch gekennzeichnet, dass** die abgesicherte Steigung mit einem Vertrauensfaktor MyOfSlope gewichtet wird, der vorzugsweise in Abhängigkeit von dem durch die Antriebsschlupfregelung angeforderten Motormoment, dem aktuellen Motormomentenverlauf, der ersten Varianz, dem Abstand des schnellsten und langsamsten Rades zueinander, der betragsmäßigen Abweichung der geschätzten Steigung und der frequenzbegrenzten Steigung ermittelt wird.

**17.** Anpassung der Fahrzeugreferenzgeschwindigkeit an eine Fahrsituation **gekennzeichnet durch** die Merkmale nach einem der Ansprüche 1 bis 16.

**18.** Anpassung nach Anspruch 17, **dadurch gekennzeichnet, dass** zu dem Referenzgradient der Fahrzeugreferenzgeschwindigkeit um die ermittelte Steigung additiv angehoben wird.

**Claims**

1. Method for controlling driving on a hill for all-wheel drive vehicles, wherein vehicle acceleration is determined and an acceleration of the vehicle is measured, comprising the steps of:

   determining the acceleration at the secondary axle from one or both of the two wheel speeds
   determining the deviation between the acceleration at the secondary axle and the measured acceleration, **characterized by** the steps of:

   filtering the determined deviation with a time constant comparing the deviation with the filtered deviation
   determining driving situations representing the conditions 'traction slip control is active' or 'traction slip control is not active'
   determining the slope in dependence on the comparison result and the driving situation.

2. Method as claimed in claim 1,
   **characterized in that** the slope is determined by means of at least one first allowable variance by filtering the result of comparison.

3. Method as claimed in claim 2,
   **characterized in that** the variance is determined by low-pass filtering from the r.m.s. deviation of the current deviation and the filtered deviation.

4. Method as claimed in claim 2,
   **characterized in that** a threshold value 'Tcs0_est_slope_var_limit' of the first variance is empirically determined.

5. Method as claimed in claim 4,
   **characterized in that** the value of the filtered deviation or of a saved slope is allowed as a slope in a driving situation where traction slip control is not active and wherein the first variance ≤ the threshold value Tcs0_est_slope_var-limit.

6. Method as claimed in any one of claims 2 to 5,
   **characterized in that** a second variance is determined which represents the acceleration of the secondary axle in dependence on the engine torque.

7. Method as claimed in claim 6,
   **characterized in that** the second variance and the first variance are evaluated.

8. Method as claimed in either one of claims 6 or 7,
   **characterized in that** in a driving situation where traction slip control is active, a quantity that is caused externally, drives the vehicle or represents an unstable wheel run, e.g. downhill driving, riding on ice, etc. is determined in dependence on the evaluation of the first and second variance.

9. Method as claimed in any one of claims 6 to 8,
   **characterized in that** a threshold value Tcs0_est_torque_var_limit of the second variance is determined empirically.

10. Method as claimed in any one of claims 6 to 9,
    **characterized in that** for testing whether the acceleration at the secondary axle indicates the actual vehicle acceleration, it is determined whether the determined value of the second variance reaches or exceeds at least 1.5 to 2.5 times the value of the first variance.

11. Method as claimed in claim 10,
    **characterized in that** when the condition 'second variance = at least 1.5 to 2.5 * first variance' is satisfied, the value of the filtered slope is allowed as slope.

**12.** Method as claimed in any one of claims 6 to 11,
**characterized in that** the determination of the slope is terminated, with the traction slip control active, when the first variance and the second variance reach or fall below at least one bottom threshold value Tcs0_est_slope_var_limit' or Tcs_0_est_slope_var_limit, respectively, and the respective threshold value of the variances can be equal or different.

**13.** Method as claimed in claim 11,
**characterized in that** the engine torque is modulated for exciting the traction slip control unit in the case that the first variance reaches or falls below the threshold value Tcs0_est_slope_var_limit and the second variance reaches or falls below the threshold value Tcs0_est_torque_var_limit.

**14.** Method as claimed in claim 4,
**characterized in that** a saved slope is allowed when an unstable wheel run is determined or indicated by the relation 'first variance ≥ Tcs0_est_slope_var_limit'.

**15.** Method as claimed in claims 14,
**characterized in that** the saved slope is determined in dependence on the filtered deviation and a factor MyOf-Slope.

**16.** Method as claimed in claim 15,
**characterized in that** the saved slope is weighted with a coefficient of confidence MyOfSlope which is preferably determined in dependence on the engine torque requested by traction slip control, the current engine torque variation, the first variance, the distance between the fastest and the slowest wheel, the rate of deviation of the estimated slope and the slope limited by frequency.

**17.** Adaptation of the vehicle reference speed to a driving situation **characterized by** the features as claimed in any one of claims 1 to 16.

**18.** Adaptation as claimed in claim 17,
**characterized in that** the reference gradient of the vehicle reference speed is raised by addition of the determined slope.

**Revendications**

**1.** Procédé pour déterminer un trajet en côte et descente pour véhicules à quatre roues motrices, une accélération de véhicule étant déterminée et une accélération du véhicule étant mesurée, comportant les étapes :

détermination de l'accélération sur l'essieu secondaire à partir d'une ou des deux vitesses des roues,

détermination de l'écart entre l'accélération sur l'essieu secondaire et l'accélération mesurée,

**caractérisé par** les étapes suivantes :

filtrage de l'écart déterminé avec une constante de temps, comparaison de l'écart à l'écart filtré, détermination de situations de conduite qui traduisent les états : « régulation active du glissement d'entraînement » ou «régulation non active du glissement d'entraînement », détermination de la pente en fonction du résultat de la comparaison et de la situation de conduite.

**2.** Procédé selon la revendication 1, **caractérisé en ce que** la pente est déterminée au moyen d'au moins une première variance admissible par filtrage du résultat de la comparaison.

**3.** Procédé selon la revendication 2, **caractérisé en ce que** la variance est déterminée par filtrage passe-bas à partir de l'écart carré par rapport à l'écart actuel et filtré.

**4.** Procédé selon la revendication 2, **caractérisé en ce qu'**une valeur de seuil « Tcs0_est_slope_var_limit » de la première variance est déterminée de façon empirique.

**5.** Procédé selon la revendication 4, **caractérisé en ce que** dans le cas d'une situation de conduite dans laquelle la régulation du glissement d'entraînement n'est pas active et dans laquelle la première variance est inférieure ou égale à la valeur de seuil Tcs0_est_slope_var_limit, on autorise comme pente la valeur de l'écart filtré ou d'une pente assurée.

**6.** Procédé selon l'une des revendications 2 à 5, **caractérisé en ce qu'**on détermine une deuxième variance qui traduit l'accélération de l'essieu secondaire en fonction du couple moteur.

**7.** Procédé selon la revendication 6, **caractérisé en ce que** la deuxième variance et la première variance sont évaluées.

**8.** Procédé selon l'une des revendications 6 ou 7, **caractérisé en ce que** dans le cas d'une situation de conduite dans laquelle la régulation du glissement d'entraînement est active, on détermine, en fonction de l'évaluation de la première et de la deuxième variance, une grandeur de cause externe, entraînant le véhicule ou traduisant un roulement instable des roues, par exemple un trajet en côte, une conduite sur verglas, etc.

**9.** Procédé selon l'une des revendications 6 à 8, **caractérisé en ce qu'**une valeur de seuil Tcs0_est_torque_var_limit de la deuxième variance est déterminée de façon empirique.

**10.** Procédé selon l'une des revendications 6 à 9, **caractérisé en ce que** pour vérifier si l'accélération sur l'essieu secondaire traduit l'accélération effective du véhicule, on détermine si la valeur déterminée de la deuxième variance atteint ou dépasse au moins 1,5 à 2,5 fois la valeur de la première variance.

**11.** Procédé selon la revendication 10, **caractérisé en ce que** dans le cas où la condition « deuxième variance = au moins 1,5 à 2,5*première variance » est satisfaite, on autorise comme pente la valeur de l'écart filtré.

**12.** Procédé selon l'une des revendications 6 à 11, **caractérisé en ce que** dans le cas où la régulation du glissement d'entraînement est active, la détermination de la pente est terminée lorsque la première variance et la deuxième variance atteignent ou sous-dépassent une valeur de seuil inférieure Tcs0_est_torque_var_limit ou Tcs0_est_slope_var_limit, les valeurs de seuil respectives des variances pouvant être égales ou différentes.

**13.** Procédé selon la revendication 11, **caractérisé en ce que** dans le cas dans lequel la première variance atteint ou sous-dépasse la valeur de seuil Tcs0_est_slope_var_limit et la deuxième variance atteint ou sous-dépasse la valeur de seuil Tcs0_est_torque_var_limit, le couple moteur est modulé pour agir sur le régulateur du glissement d'entraînement.

**14.** Procédé selon la revendication 4, **caractérisé en ce qu'**une pente assurée est autorisée lorsqu'un roulement instable des roues est déterminé ou indiqué par la relation « première variance ≥ à Tcs0_est_slope_var_limit ».

**15.** Procédé selon la revendication 14, **caractérisé en ce que** la pente assurée est déterminée en fonction de l'écart filtré (SlopeFilt) et d'un facteur MyOfSlope.

**16.** Procédé selon la revendication 15, **caractérisé en ce que** la pente assurée est pondérée avec un facteur de confiance MyOfSlope qui est déterminé de préférence en fonction du couple moteur exigé par la régulation du glissement d'entraînement, de l'allure actuelle du couple moteur, de la première variance, de l'écartement de la roue la plus rapide et de la roue la plus lente, de l'écart en valeur absolue de la pente estimée et de la pente limitée en fréquence.

**17.** Adaptation de la vitesse de référence du véhicule à une situation de conduite **caractérisée par** les caractéristiques selon l'une des revendications 1 à 16.

**18.** Adaptation selon la revendication 17, **caractérisée en ce que** le gradient de référence de la vitesse de référence du véhicule est relevé par addition de la pente déterminée.